# EUROPEAN PATENT SPECIFICATION

(11) **EP 2 664 483 B1**
(45) Date of publication and mention of the grant of the patent: **12.08.2020**
(21) Application number: 13002501.8
(22) Date of filing: 13.05.2013
(51) Int. Cl.: B60L 53/16, B60L 53/60, H01R 13/707, H01R 13/453

(54) **Power supply outlet assembly for charging electric drive vehicles**
Stromversorgungsauslassgarnitur zum Aufladen von elektrischen Fahrzeugen
Ensemble de sortie d'alimentation électrique charger des véhicules électriques

(30) Priority: 15.05.2012 IT MI20120835
(43) Date of publication of application: 20.11.2013
(73) Proprietor: GEWISS S.p.A., 24069 Cenate Sotto (Bergamo) (IT)
(72) Inventor: Bosatelli, Domenico, 24069 Cenate Sotto (Bergamo) (IT)
(74) Representative: Forattini, Amelia

(56) References cited:
- EP-A2- 2 306 418
- WO-A2-00/51207
- DE-A1-102006 047 039
- DE-U1-202012 101 359
- DE-U1-202012 101 364
- US-A1- 2002 112 945

## Description

The present invention relates to a power supply outlet assembly for powering and/or recharging electric vehicles.

Power pedestals, posts and panels are known for supplying power to mobile loads, such as electric appliances in construction sites, camping sites, marinas, and in general for supplying power to transport vehicles such as campers, cars, scooters, etc.

The expanding use of electric vehicles has generated the need of an adequate infrastructure to ensure an efficient recharging of those vehicles, also in view of the problem constituted by their range, which is still considerably smaller than that provided by traditional vehicles.

Publicly accessible charging stations generally consist of small panels installed on a wall in private areas or in posts in public or partially public areas, for example in company parking lots.

Recharging occurs by means of connectors which, depending on the recharging area, can be of the traditional type, for example power sockets for domestic use or industrial type sockets, or of a special type.

The domestic power sockets are used in areas with access reserved to the owner of the vehicle, while the industrial sockets or special connectors are preferred in a public context.

The special connectors are provided with one or more contacts dedicated to communication between the power grid and the vehicle, ensuring safe and effective recharging.

An important problem of currently commercially available connectors is linked to the need to ensure the safety of users against the penetration of small solid objects such as for example nails, needles or the like.

Those connectors are in fact located in unsupervised areas, even in a residential environment.

Therefore, one cannot rule out episodes of vandalism or someone, such as a child, inserting an object in the receptacles, with consequent severe risk of electrocution.

The receptacles are in fact permanently powered up, because the automatic protection circuit breaker arranged in the panel is normally closed and cannot be accessed by the user.

In order to reduce this risk, standards require for example that the outlets have a degree of protection that is high enough to prevent the insertion of a 1 mm wire.

This protection is generally provided by means of shutters or partitions that cover the access to the powered-up receptacles and therefore must be moved before accessing them.

This movement occurs only by pressing simultaneously more than one of the shutters, as occurs when one acts by means of the pins of a plug, whereas the simple pressing of a single shutter, as might occur by acting for example with a nail, does not cause its movement.

As a function of the various embodiments, these shutters can be arranged inside the connector directly downstream of the metallic part constituted by the receptacles or on adapted external modules that are fitted in a protruding position over the connectors.

Both systems described above have problems of a mechanical type, for example they may jam because of dirt or in unfavorable atmospheric conditions, such as for example at low temperatures.

Other problems of the conventional shutter systems are due to their complex construction and/or excessive bulk.

As an alternative to shutters, standards provide for ensuring disconnection between the connector and the circuit upstream of the panel by means of an adapted device.

However, this second possibility generally is not used, since it causes the need to use special contactors having sufficient characteristics to be classified as disconnectors.

It should be noted that for this purpose it is not sufficient for the circuit to be interrupted electrically, it is in fact also necessary to check that the contacts are such as to ensure the disconnection characteristics such as for example a sufficient opening of the contacts and the impossibility to provide incorrect open circuit indications if the contacts stick.

Those disconnectors in fact act by means of contactor coils, which normally do not have this property unless they are provided specifically for this purpose, with a consequent significant cost increase.

Another risk factor, linked to electrical recharging, is constituted by the presence of the chassis of cars, which by constituting a metallic mass of considerable size that is isolated from the ground, is a source of risk of electrocution in case of malfunction.

Moreover, this problem is increased by the fact that recharging often occurs outdoors, i.e., with the possible presence of water or humidity.

Under these conditions, standards require each outlet to be protected individually by means of a dedicated automatic residual-current protection breaker.

This situation entails a series of drawbacks, such as for example the need to provide particularly capacious support panels.

Also, in case of failure of the components it is necessary to open the panels before accessing the apparatus, the apparatus being often arranged in a particularly awkward position.

Another drawback is constituted by the presence of different standards regarding the connectors.

Since the technology of electric vehicles is evolving considerably, those standards are subject to continuous modifications and updates which car manufacturers have to follow, in order to comply with the most recent technical developments.

This causes the risk of easily rendering obsolete and no longer usable outlets installed on existing posts, with the consequent need to replace the outlet completely, with consequent cost increase.

Since conventional apparatuses are normally not modular, the replacement of an outlet may even entail the removal of the entire panel and/or post.

A problem of commercially available products is due to the low degree of protection they offer against the penetration of dirt and water.

The continuous penetration of water would in fact cause possible dangers for the user, severe risk of deterioration of the apparatus or in any case the need to provide the connectors with complicated draining systems.

Another problem that is common to this type of function is that of untimely tripping.

It is known that residual current breakers, in particular, are characterized by a mediocre resistance to impulsive stresses produced by various phenomena, such as for example atmospheric discharges.

Therefore, the opening of these devices commonly causes the premature conclusion of recharging, leaving the vehicle not fully recharged with consequent inconveniences for the user, who may have left the vehicle connected for several hours.

Currently commercially available connectors constitute a mere electrical connection means, while all the part dedicated to protection and intelligence is arranged inside the panel.

At the most, they can be provided with a door that can be released by means of a key that is available only to authorized people and can be constituted for example by a transponder or a card.

This is done to allow recharging to be performed only by people who are authorized and to whom the cost thereof might be billed.

A further risk related to the fact that recharging often occurs in outdoor and public areas and, in view of its duration, in the absence of the user, is the unauthorized removal of the plug, with consequent premature conclusion of recharging.

Moreover, it is necessary to consider that connectors of the conventional type are often unable to interrupt the current and therefore the manual removal of the plug may entail their severe damage and a consequent risk for the user.

To avoid this situation, the connectors are often provided with an interlocking device that allows to remove the plug only after the receptacles of the outlet have been powered down.

This type of interlock is generally provided by means of a mechanical and/or electric device connected to a bolt that locks the plug in position.

A further problem of conventional connectors is the possible deterioration of the movable connectors and of the corresponding power supply cables of the vehicles, the connectors and cables may in fact be easily damaged because of the weather and by impacts caused by being dropped or stepped upon. In such situations, trying to connect a damaged connector to the power socket may cause short circuits capable of potentially endangering the user.

EP2306418 **discloses a charging station having a housing with a movably arranged flap, behind which a charging socket is located. A locking mechanism is equipped with** a **locking member which is pushed forward towards the flap. The locking member is pushed until the locking member protrudes in the movement path of the flap. The locking member protrudes to pull back the flap.**

WO00/51207 **discloses an electrical socket having a plurality of socket apertures to receive the pins of plugs of various designs from many countries of the world. The socket has a circuit breaker that prevents damage to an appliance attached to the socket due to current leakage or shock current, and the user is warned when there is a heat overload.**

The aim of the present invention is to provide a power supply outlet for powering and/or recharging electric vehicles that overcomes the drawbacks of the cited prior art.

Within the scope of this aim, an object of the invention is to provide a power supply outlet that is capable of ensuring, when the plug is not inserted, both the power-up of the corresponding receptacles and their disconnection with respect to the power supply without the need of shutters and/or covers.

Another object of the invention is to provide a connector that is compact and can accommodate, within the same casing, the apparatuses required for its protection.

A further object of the present invention is to ensure maximum flexibility in operation, allowing to accommodate outlets of different standards and allowing their possible replacement, simply and cheaply.

A further object of the invention is to ensure the modularity of the outlets and that they can be easily replaced and arranged side by side in a battery.

Another object of the present invention is to provide an outlet that is a compact block without openings or adjacently arranged parts, consequently being able to achieve a higher degree of protection against the penetration of water.

Another object of the present invention is to provide an outlet provided with an automatic reclosing device, capable of reclosing the circuit with which it is associated following the verification of the circuit with which the outlet is associated.

A further object of the present invention is to ensure an interlocked system that does not allow to remove the plug when the receptacles of the outlet are powered up.

Another object of the present invention is to provide an outlet that is capable of performing a preliminary check of the system and of supplying power to the connectors only if there are no faults.

Another object of the present invention is to provide an outlet which, by virtue of its particular constructive characteristics, is capable of giving the greatest assurances of reliability and safety in use.

This aim and these and other objects that will become better apparent hereinafter are achieved by a power supply outlet assembly for powering and/or recharging electric vehicles, **as claimed in the appended claims.**

Further characteristics and advantages will become better apparent from the description of preferred but not exclusive embodiments of the invention, illustrated by way of non-limiting example in the accompanying drawings, wherein:

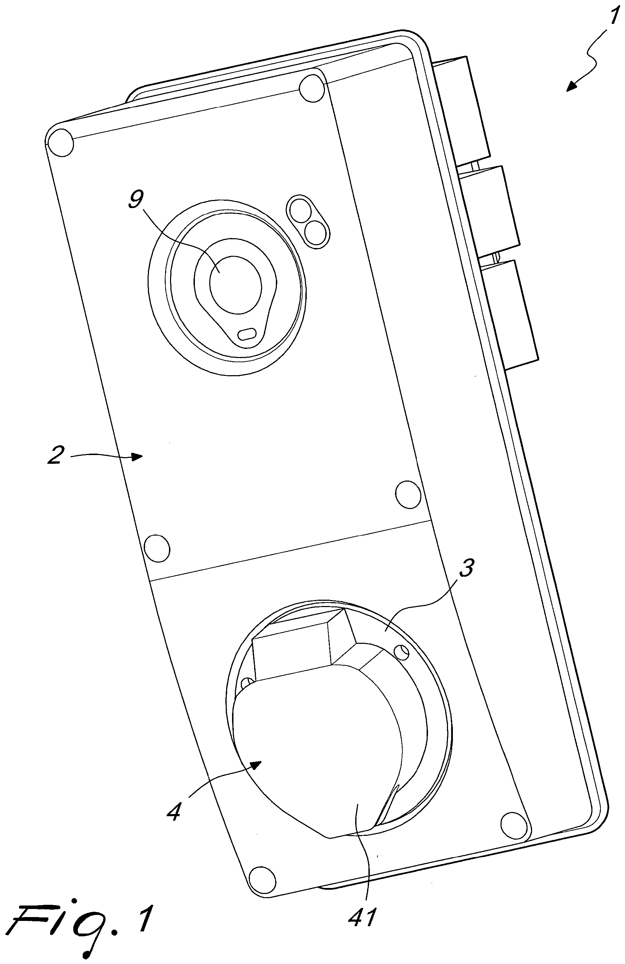

Figure 1 is a perspective view of the front part of the outlet assembly, according to, the present invention;

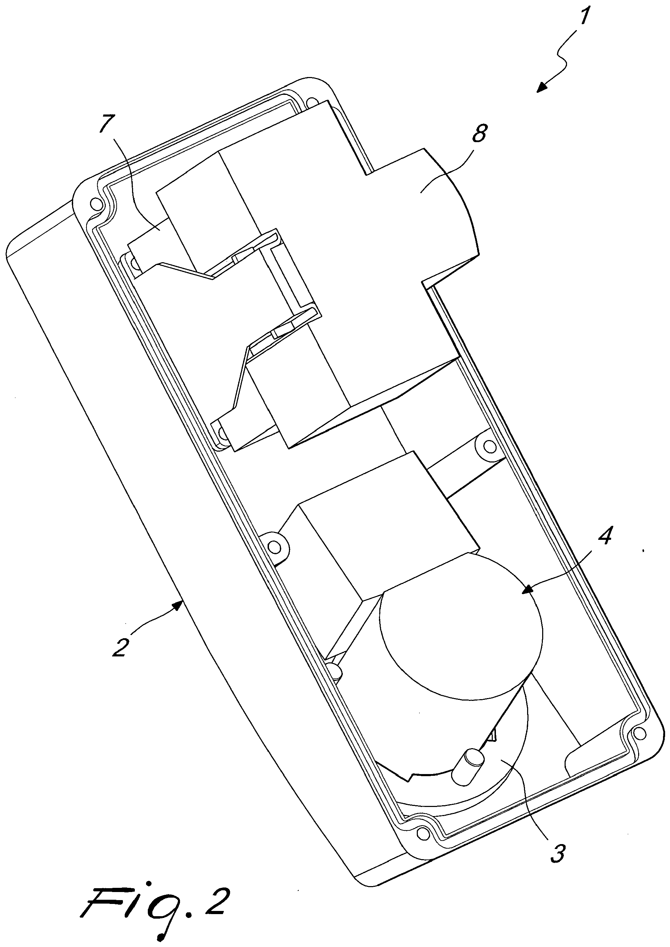

Figure 2 is a perspective view of the rear part of the outlet assembly;

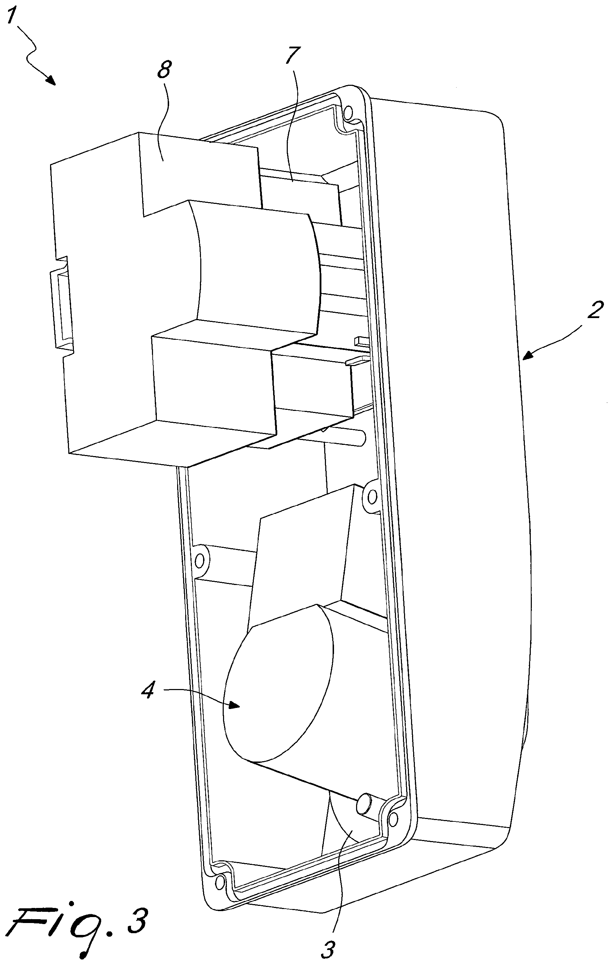

Figure 3 is another perspective view of the rear part of the outlet assembly.

With reference to the above figures, the outlet assembly for powering and/or recharging electric vehicles, according to the invention, generally designated by the reference numeral 1, comprises a front casing 2, which can be applied to a panel or post or pillar, not visible in the figures, of a station for supplying and/or recharging electric vehicles.

The front casing 2 has a flange 3. A power supply socket 4 is fastened to the flange 3 and faces toward the outside of the casing.

The front casing 2 is provided internally with a support to which one or more automatic protection breakers 7 and an automatic reclosing device 8 are engaged.

The support is preferably constituted by a DIN rail.

Advantageously, the automatic protection breaker or the automatic protection breakers 7 are of the compact type, so as to allow their installation within a front casing 2 that has particularly small dimensions.

Normally, the socket 4 is not powered up and is disconnected by means of the automatic protection breaker 7.

The outlet assembly has an actuation means, for example a breaker, which is associated with the socket 4 and is closed by inserting the plug in the outlet.

This actuation means acts on the circuit for actuating the automatic reclosing device 8, which activates the closure of the automatic protection breaker 7.

In this situation, the outlet is powered up and recharging can commence.

At the end of recharging, the plug can be removed from the power supply socket 4 and the automatic reclosing device 8 opens the circuit automatically, restoring on the receptacles the initial conditions of no voltage and disconnection.

An insulation checking device may be associated with the automatic reclosing device 8, for checking the insulation. Such insulation checking device may be integrated in the reclosing device itself or can be provided by means of an external board.

The insulation checking device inhibits the reclosing of the automatic protection breaker and the consequent supply of the load in the presence of a fault downstream of the circuit.

The insulation checking device can act preventively, upon the insertion of the plug in the outlet, or during normal operation, following the tripping of the protection breaker.

In the case of untimely opening actions, caused by transient phenomena such as for example overvoltages of atmospheric origin, the insulation checking device allows the automatic reclosing of the reclosing device.

In the embodiment illustrated herein, the socket 4 includes a cover 41.

The cover 41 is normally locked to prevent access by unauthorized people.

Release of the cover can occur by virtue of an auxiliary means, for example a transponder, when placed in the vicinity of a receiver 9.

This auxiliary means communicates with a circuit, arranged inside the front casing 2, and sends the request for authorized access to recharging; the circuit releases the cover 41, which can thus be opened, allowing the user to insert the plug.

The outlet assembly is configured to be associated, in a modular manner, to an electrical panel or pillar, so that it can be replaced easily and so as to reduce the space occupied.

By mounting the socket 4 by means of the flange 3, the socket may be removed easily in order to replace it, possibly with a socket of a different standard.

The outlet assembly 1 can be adapted rapidly and easily to local standards by fitting an adequate socket, simply by replacing the flange for connection to the body 2.

In practice it has been found that the invention achieves the intended aim and objects, providing an outlet that is compact, especially for supplying power and/or for recharging electrical vehicles.

In the absence of a plug, the socket is not powered up and is disconnected.

Another advantage is that the socket is powered automatically by the insertion of the corresponding plug by means of the automatic reclosing device.

The outlet assembly according to the present invention differs from conventional devices, in which the protection of the user occurs by means of shutters arranged on the outlet and/or by means of contactors for opening the circuits that have the property of contact disconnection.

The present invention has several and important advantages over the prior art.

The supply of power to the outlet, following the insertion of the corresponding plug, actuates the automatic reclosing device, the action of which is dependent on a preventive check of the system and inhibits the supply of power to the outlet in the presence of malfunctions on the power supply circuit.

If the power supply and/or recharging is interrupted, due to the tripping of the automatic protection breaker, the control circuit checks the status of the system and restores the power supply conditions only if there are no faults on the supply circuit.

The control device can be an integral part of the reclosing device or can be an element that is external to the reclosing device.

The casing accommodates all the breakers required for its own protection.

The compact outlet according to the present invention can be provided with outlets of a different standard, which can be easily replaced without having to remove the entire outlet body.

The present outlet assembly ensures a degree of protection that is higher than conventional systems.

The present outlet assembly ensures the interlocking of the plug.

## Claims

1. A power supply outlet assembly for powering and/or recharging electric vehicles, comprising a casing **(2)** that accommodates at least one power socket **(4)** and at least one **circuit** breaker **(7)** that is electrically associated with said socket **(4);** an adapter **(3),** to which said at least one power supply socket is fixed, and a support, to which said at least one **circuit** breaker is attached; **said power supply socket (4) being normally powered down and being disconnected by means of said circuit breaker (7);** said outlet assembly **being characterized in that it** comprises an **auto-closure** device (8), which is associated with said **circuit** breaker **(7), and an insulation control** device associated with said **auto-closure** device **(8);** an actuation means **being** associated with said socket **(4) and being activated by the insertion of a plug in said socket (4); said actuation means being** adapted to actuate said **auto-closure** device **(8), which activates the closure of said circuit breaker (7).**

2. The outlet assembly according to claim 1, **characterized in that** said adapter is constituted by a flange **(3)** detachably fastened at an opening of said casing **(2).**

3. The outlet assembly according to claim 1, **characterized in that** said support is constituted by a DIN rail.

4. The outlet assembly according to claim 1, **characterized in that** said actuation means acts on a circuit for actuating said **auto-closure** device **(8),** which activates the closure of said **circuit** breaker **(7)** and supplying power to said socket **(4);** a removal of said plug from said power supply socket **(4)** actuates said **auto-closure** device **(8),** which automatically opens the circuit, interrupting the power supply of said socket **(4).**

5. The outlet assembly according to claim 1, **characterized in that** said insulation control device inhibits the reclosing of said **circuit** breaker **(7)** and the consequent supply of power to the load in the presence of a fault downstream of the circuit, both in a preventive manner, upon the insertion of the plug in the socket **(4),** and during normal operation due to the tripping of the protection breaker **(7);** in the case of untimely opening actions caused by transient phenomena, said control device actuates said **auto-closure** device **(8)** to close the circuit.

6. The outlet assembly according to claim 1, **characterized in that** it comprises a normally locked cover **(41)** which prevents unauthorized access to said power supply socket **(4);** said cover **(41)** being releasable by virtue of an auxiliary means.

7. The outlet assembly according to claim 6, **characterized in that** said auxiliary means is constituted by a transponder which, placed in the vicinity of a receiver **(9),** communicates, to a circuit inside said casing **(2),** a request for authorized access to recharging and the circuit releases said cover **(41)** which opens, allowing a user to insert the plug.

8. The outlet assembly according to claim 1, **characterized in that** said at least one **circuit** breaker **(7)** is a compact breaker configured to be installed inside a small casing.

9. The outlet assembly according to claim 1, **characterized in that** said actuation means is a breaker.

## Patentansprüche

1. Ein Stromversorgungsausgangsaufbau zum Versorgen und/oder Wiederaufladen elektrischer Fahrzeuge mit Strom, der ein Gehäuse (2) umfasst, das mindestens eine Netzsteckdose (4) und mindestens einen Trennschalter (7) umfasst, welcher elektrisch mit der Steckdose (4) verbunden ist; einen Adapter (3), an dem die mindestens eine Netzsteckdose befestigt ist, und einen Träger, an dem der mindestens eine Trennschalter befestigt ist, wobei die Netzsteckdose (4) normalerweise mit dem Trennschalter (7) ausgeschaltet und getrennt wird, wobei der Ausgangsaufbau **dadurch gekennzeichnet ist, dass** er eine Selbstverschlussvorrichtung (8) umfasst, die mit dem Trennschalter (7) verbunden ist, und eine Isoliersteuervorrichtung, die mit der Selbstverschlussvorrichtung (8) verbunden ist, wobei ein Betätigungsmittel mit der Steckdose (4) verbunden ist und durch Einführen eines Steckers in die Steckdose (4) aktiviert wird, wobei das Betätigungsmittel ausgebildet ist, um die Selbstverschlussvorrichtung (8) zu betätigen, welche das Schließen des Trennschalters (7) auslöst.

2. Der Ausgangsaufbau gemäß Anspruch 1, **dadurch gekennzeichnet, dass** der Adapter aus einem Flansch (3) besteht, der abnehmbar an einer Öffnung des Gehäuses (2) angebracht ist.

3. Der Ausgangsaufbau gemäß Anspruch 1, **dadurch gekennzeichnet, dass** der Träger aus einer DIN-Schiene besteht.

4. Der Ausgangsaufbau gemäß Anspruch 1, **dadurch gekennzeichnet, dass** das Betätigungsmittel auf einen Schaltkreis zum Betätigen der Selbstverschlussvorrichtung (8) einwirkt, die das Schließen des Trennschalters (7) und das Versorgen der Steckdose (4) mit Strom aktiviert; ein Herausnehmen des Steckers aus der Netzsteckdose (4) aktiviert die Selbstverschlussvorrichtung (8), die den Schaltkreis automatisch öffnet und so die Stromversorgung der Steckdose (4) unterbricht.

5. Der Ausgangsaufbau gemäß Anspruch 1, **dadurch gekennzeichnet, dass** die Isoliersteuervorrichtung das erneute Schließen des Trennschalters (7) und die daraus folgende Stromversorgung der Last bei einem Fehler stromabwärts vom Schaltkreis, beides präventiv, beim Einsetzen des Steckers in die Steckdose (4) und während des Normalbetriebs aufgrund der Auslösung des Trennschalters (7) verhindert; im Falle unzeitiger Öffnungsvorgänge, die durch Ausgleichsvorgänge verursacht werden, betätigt die Steuervorrichtung die Selbstverschlussvorrichtung (8), um den Stromkreis zu schließen.

6. Der Ausgangsaufbau gemäß Anspruch 1, **dadurch gekennzeichnet, dass** er einen normalerweise geschlossenen Deckel (41) umfasst, der unautorisierten Zugriff auf die Netzsteckdose (4) verhindert, wobei der Deckel (41) durch ein Zusatzmittel abnehmbar ist.

7. Der Ausgangsaufbau gemäß Anspruch 6, **dadurch gekennzeichnet, dass** das Zusatzmittel aus einem Transponder besteht, welcher, in die Nähe eines Empfängers (9) positioniert, einem Schaltkreis innerhalb des Gehäuses (2) eine Anfrage nach autorisiertem Zugriff zum Wiederaufladen sendet und der Schaltkreis den Deckel (41) freigibt, der sich dann öffnet und es so einem Benutzer ermöglicht, den Stecker einzuführen.

8. Der Ausgangsaufbau gemäß Anspruch 1, **dadurch gekennzeichnet, dass** der mindestens eine Trennschalter (7) ein kompakter Schalter ist, der ausgebildet ist, um in einem kleinen Gehäuse installiert zu werden.

9. Der Ausgangsaufbau gemäß Anspruch 1, **dadurch gekennzeichnet, dass** das Betätigungsmittel ein Trennschalter ist.

## Revendications

1. Ensemble de sortie d'alimentation électrique destiné à l'alimentation électrique et/ou au rechargement de véhicules électriques, comprenant un boîtier (2) accueillant au moins une prise électrique (4) et au moins un coupe-circuit (7) électriquement associé à ladite prise (4); un adaptateur (3) auquel est fixé l'au moins une prise d'alimentation électrique, et un support auquel est relié ledit au moins un coupe-circuit; ladite prise d'alimentation électrique (4) étant normalement mise hors tension et déconnectée au moyen dudit coupe-circuit (7); ledit ensemble de sortie étant **caractérisé en ce qu'**il comprend un dispositif de fermeture automatique (8) associé audit coupe-circuit (7), et un dispositif de commande d'isolation associé audit dispositif de fermeture automatique (8); un moyen d'actionnement étant associé à ladite prise (4) et activé par l'insertion d'une fiche dans ladite prise (4); ledit moyen d'actionnement étant adapté pour actionner ledit dispositif de fermeture automatique (8), lequel active la fermeture dudit coupe-circuit (7).

2. Ensemble de sortie selon la revendication 1, **caractérisé en ce que** ledit adaptateur est constitué par une bride (3) fixée de façon détachable au niveau d'une ouverture dudit boîtier (2) .

3. Ensemble de sortie selon la revendication 1, **caractérisé en ce que** ledit support est constitué par un rail DIN.

4. Ensemble de sortie selon la revendication 1, **caractérisé en ce que** ledit moyen d'actionnement agit sur un circuit pour actionner ledit dispositif de fermeture automatique (8), lequel active la fermeture dudit coupe-circuit (7), et pour alimenter ladite prise (4) en puissance; un retrait de ladite fiche hors de ladite prise d'alimentation électrique (4) actionne ledit dispositif de fermeture automatique (8), lequel ouvre automatiquement le circuit, interrompant l'alimentation électrique de ladite prise (4).

5. Ensemble de sortie selon la revendication 1, **caractérisé en ce que** ledit dispositif de commande d'isolation empêche la refermeture dudit coupe-circuit (7) et l'alimentation électrique consécutive de la charge en présence d'un défaut en aval du circuit, à la fois de manière préventive lors de l'insertion de la fiche dans la prise (4) et pendant le fonctionnement normal en raison du déclenchement du disjoncteur de protection (7); en cas d'ouverture inopportune due à un phénomène transitoire, ledit dispositif de commande actionne ledit dispositif de fermeture automatique (8) pour le fermeture du circuit.

6. Ensemble de sortie selon la revendication 1, **caractérisé en ce qu'**il comprend un couvercle (41) normalement verrouillé, lequel empêche tout accès non autorisé à ladite prise d'alimentation électrique (4); ledit couvercle (41) étant libérable à l'aide d'un accessoire.

7. Ensemble de sortie selon la revendication 6, **caractérisé en ce que** ledit moyen d'actionnement est constitué par un transpondeur, lequel communique, lorsqu'il est placé à proximité d'un récepteur (9), une demande d'autorisation d'accès pour le rechargement à un circuit à l'intérieur dudit boîtier (2), et le circuit libère ledit couvercle (41), lequel s'ouvre pour permettre à un utilisateur d'insérer la fiche.

8. Ensemble de sortie selon la revendication 1, **caractérisé en ce que** ledit au moins un coupe-circuit (7) est un disjoncteur compact configuré pour être installé à l'intérieur d'un boîtier de petite taille.

9. Ensemble de sortie selon la revendication 1, **caractérisé en ce que** ledit moyen d'actionnement est un disjoncteur.
